# EUROPEAN PATENT APPLICATION

(11) **EP 4 293 789 A1**
(43) Date of publication of application: **20.12.2023**
(21) Application number: 21925196.4
(22) Date of filing: 09.02.2021
(51) Int. Cl.: H01M 10/0587

(54) **ELECTROCHEMICAL APPARATUS AND ELECTRONIC APPARATUS**

(71) Applicant: Ningde Amperex Technology Ltd., Ningde, Fujian 352106 (CN)
(72) Inventor: LI, Xuecheng, Ningde, Fujian 352106 (CN)
(74) Representative: Klunker IP Patentanwälte PartG mbB
(86) International application number: PCT/CN2021/076386
(87) International publication number: WO 2022/170531

(57) **Abstract**

An electrochemical device includes a housing and an electrode assembly. The electrode assembly includes a first electrode plate, a second electrode plate, and a separator disposed between the first electrode plate and the second electrode plate. The first electrode plate includes a first current collector and a first active material layer disposed on the first current collector. The second electrode plate includes a second current collector and a second active material layer disposed on the second current collector. The electrode assembly is a wound structure and disposed in the housing. In a winding direction, the electrode assembly includes a first section, a first bend section, a second section, and a second bend section connected sequentially. In a thickness direction of the electrode assembly, the first section includes a first part, and the second section includes a second part. An outermost coil of the first part is the separator, and an outermost coil of the second part is the first electrode plate. This application further provides an electronic device containing the electrochemical device. This application can improve the anti-drop performance and safety of the electrochemical device.

## Description

### TECHNICAL FIELD

This application relates to the field of energy storage, and in particular, to an electrochemical device and an electronic device containing the electrochemical device.

### BACKGROUND

Electrochemical devices (such as a battery) are widely used in electronic products such as an electronic mobile device, an electric tool, and an electric vehicle, and people are posing higher requirements on safety performance of the electrochemical devices. An electronic product in use is prone to mechanical abuse such as drop, collision, and vibration, thereby being vulnerable to a short circuit within the electrochemical device, causing failure, and reducing safety of the product in use.

### SUMMARY

In view of the disadvantages of the prior art, it is necessary to disclose an electrochemical device that is conducive to improving the anti-drop performance and safety.

In addition, it is necessary to provide an electronic device containing the electrochemical device.

This application provides an electrochemical device. The electrochemical device includes a housing and an electrode assembly. The electrode assembly includes a first electrode plate, a second electrode plate, and a separator disposed between the first electrode plate and the second electrode plate. The electrode assembly is a wound structure and disposed in the housing. In a winding direction, the electrode assembly includes a first section, a first bend section, a second section, and a second bend section connected sequentially. In a winding direction, the first section includes a first part, and the second section includes a second part. An outermost coil of the first part is the separator, and an outermost coil of the second part is the first electrode plate.

In this application, the separator is prolonged and used as an ending. The outermost coil of the first part is the separator, and the separator is coarser than the electrode plate. Therefore, the separator can increase the friction between the electrode assembly and the housing. In addition, this part of separator can form a protection layer to avoid short circuit hazards caused by wear and tear of the electrode plate inside this part of separator and effectively increase the capability of the electrode assembly in resisting mechanical shocks. Moreover, the outermost coil of the second part is the first electrode plate, and the hardness of the electrode plate is usually higher than that of the separator. Therefore, this part of first electrode plate can increase the hardness of the electrode assembly, thereby further increasing the capability of the electrode assembly in resisting mechanical shocks and improving safety.

In some possible implementations, an outermost coil of the first section is the separator, and an outermost coil of the second section is the first electrode plate.

In some possible implementations, in a winding direction, an end part of the separator is located at the first bend section. The electrochemical device further includes a first bonding piece. The first bonding piece is bonded to an outer surface of the first bend section and the end part of the separator, thereby fixing the end part of the separator. Therefore, this avoids increase of the thickness of the electrode assembly, where the increase of the thickness occurs because the separator is disposed in the outermost coil of the second section. This also avoids increase of the thickness occurring because the first bonding piece is bonded to the first section or the second section.

In some possible implementations, the first bonding piece is further bonded to an outer surface of at least one of the first section or the second section, so as to effectively fix the end part of the separator.

In some possible implementations, in a winding direction, an end part of the first electrode plate is located at the second section. The electrochemical device further includes a second bonding piece. The second bonding piece is bonded to an outer surface of the second bend section and the end part of the first electrode plate, thereby fixing the end part of the first electrode plate.

In some possible implementations, the second bonding piece is further bonded to an outer surface of the first section, thereby effectively fixing the end part of the first electrode plate.

In some possible implementations, at least one of the first bonding piece or the second bonding piece is double-sided tape or hot-melt adhesive.

In some possible implementations, the electrochemical device further includes a third bonding piece. The third bonding piece is bonded to an outermost coil of separator in the first part and the housing.

In some possible implementations, the first electrode plate includes a first current collector and a first active material layer disposed on the first current collector. The first current collector includes a first surface. An outer surface of an outermost coil in the second part is the first surface. The electrochemical device further includes a fourth bonding piece. The fourth bonding piece is bonded to the first surface and the housing together. The disposed third bonding piece and fourth bonding piece can implement fixing between the electrode assembly and the housing, thereby alleviating the drift of the electrode assembly in the housing when the electrochemical device is mechanically abused. Moreover, when the electronic device is mechanically abused, the electrode assembly drifts in the housing and pulls the separator. The separator is made of a material that is highly flexible, and therefore, is not prone to be torn under stress, thereby alleviating the safety problems caused by probable tearing at the end part of the first current collector (such as aluminum foil) in the prior art.

In some possible implementations, the electrochemical device further includes a first tab. The first tab is connected to the first electrode plate or the second electrode plate. In a thickness direction of the electrode assembly, a projection of the first tab does not overlap with a projection of the first bonding piece and a projection of the second bonding piece. This avoids significant increase of the thickness of the electrode assembly caused when the projection of the tab overlaps the projections of the first bonding piece and the second bonding piece.

In some possible implementations, in a direction perpendicular to a winding central axis of the electrode assembly, a projection of an edge of the first bonding piece is located between a projection of an edge of the first electrode plate and a projection of an edge of the separator. Therefore, on the one hand, this can fix the separator and reduce the short-circuit hazards caused by contact between the first electrode plate and the second electrode plate when the separator shrinks during mechanical abuse. On the other hand, this reduces the hazards of a sealing strength decrease or electrolyte leakage at a sealing flap of the housing, where the hazards occur for a reason that an excess part of the first bonding piece exceeding the separator enters the sealing flap of the housing.

In some possible implementations, in a direction perpendicular to a winding central axis of the electrode assembly, a projection of an edge of the second bonding piece is located between a projection of an edge of the first electrode plate and a projection of an edge of the separator. Therefore, on the one hand, this can fix the separator and reduce the short-circuit hazards caused by contact between the first electrode plate and the second electrode plate when the separator shrinks during mechanical abuse. On the other hand, this reduces the hazards of a sealing strength decrease or electrolyte leakage at a sealing flap of the housing, where the hazards occur for a reason that an excess part of the second bonding piece exceeding the separator enters the sealing flap of the housing.

This application further provides an electronic device, including the electrochemical device described above. The electronic device further includes an accommodation chamber and a fifth bonding piece. The electrochemical device is disposed in the accommodation chamber. The fifth bonding piece is bonded to the housing oriented to the first section together with the accommodation chamber. When the electronic device is mechanically abused, the stress generated by the electronic device pulling the housing is transmitted through the fifth bonding piece, the housing, and the first bonding piece sequentially to the outermost coil of separator in the first section. The separator is made of a material that is highly flexible, and therefore, is not prone to be torn under stress, thereby alleviating the safety problems caused by probable tearing at the end part of the first current collector (such as aluminum foil).

### BRIEF DESCRIPTION OF DRAWINGS

FIG. 1 is an overall schematic structural diagram of an electrochemical device in an implementation of this application;
FIG. 2 is a sectional view of an electrochemical device in an implementation of this application;
FIG. 3 is a sectional view of the electrochemical device shown in FIG. 2 and stripped of a housing according to some embodiments;
FIG. 4 is a sectional view of the electrochemical device shown in FIG. 2 and stripped of a housing according to other embodiments;
FIG. 5 is a sectional view of the electrochemical device shown in FIG. 2 and stripped of a housing according to still other embodiments;
FIG. 6 is a sectional view of the electrochemical device shown in FIG. 2 and stripped of a housing according to yet other embodiments;
FIG. 7 is a schematic structural diagram of a housing of the electrochemical device shown in FIG. 1 before packaging;
FIG. 8 is a rear view of the electrochemical device shown in FIG. 2 and stripped of a housing;
FIG. 9 is a front view of the electrochemical device shown in FIG. 2 and stripped of a housing;
FIG. 10 is a left view of the electrochemical device shown in FIG. 2 and stripped of a housing;
FIG. 11 is a right view of the electrochemical device shown in FIG. 2 and stripped of a housing;
FIG. 12 is a sectional view of an electrochemical device in another implementation according to some embodiments of this application;
FIG. 13 is a sectional view of an electrochemical device in another implementation according to other embodiments of this application;
FIG. 14 is a sectional view of an electronic device in an implementation of this application; and
FIG. 15 is an overall schematic structural diagram of the electronic device shown in FIG. 14.

**Reference numerals of main components:**

| | |
|---|---|
| Electronic device | 1 |
| Housing | 10 |
| Body portion | 11 |
| Sealing flap | 12 |
| First sealing film | 13 |
| Second sealing film | 14 |
| Electrode assembly | 20 |
| First electrode plate | 21 |
| Second electrode plate | 22 |
| Separator | 23 |
| First tab | 30 |
| Second tab | 40 |
| First bonding piece | 50 |
| Second bonding piece | 60 |
| Third bonding piece | 70 |
| Fourth bonding piece | 80 |
| Head adhesive tape | 90 |
| End adhesive tape | 91 |
| Electrochemical device | 100, 200 |
| Accommodation chamber | 101 |
| Fifth bonding piece | 102 |
| First pit | 130 |
| Second pit | 140 |
| First section | 201 |
| First bend section | 202 |
| Second section | 203 |
| Second bend section | 204 |
| First current collector | 211 |
| First active material layer | 212 |
| Second current collector | 211 |
| Second active material layer | 222 |
| First surface | 2111 |
| First part | 2011 |
| Second part | 2031 |
| Second surface | 2112 |
| End part | 2100, 2200, 2300 |
| Edge | 501, 601, 2101, 2301 |
| Thickness direction | T |
| Winding central axis | C |
| Winding direction | D1 |
| Direction perpendicular to the winding central axis | D2 |

This application is further described below with reference to the following specific embodiments and the foregoing drawings.

### DETAILED DESCRIPTION

The following describes the technical solutions in the embodiments of this application clearly and thoroughly with reference to the drawings hereof. Evidently, the described embodiments are merely a part of but not all of the embodiments of this application.

Unless otherwise defined, all technical and scientific terms used herein have the same meanings as usually understood by a person skilled in the technical field of this application. The terms used in the specification of this application are merely intended for describing specific embodiments but not intended to limit this application.

The following describes some embodiments of this application in detail with reference to drawings. To the extent that no conflict occurs, the following embodiments and the features in the embodiments may be combined with each other.

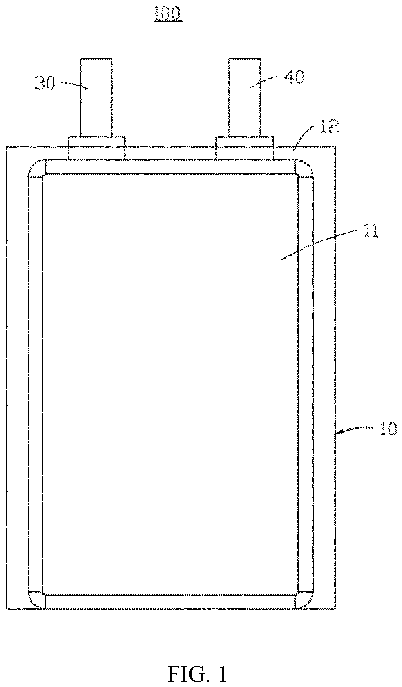

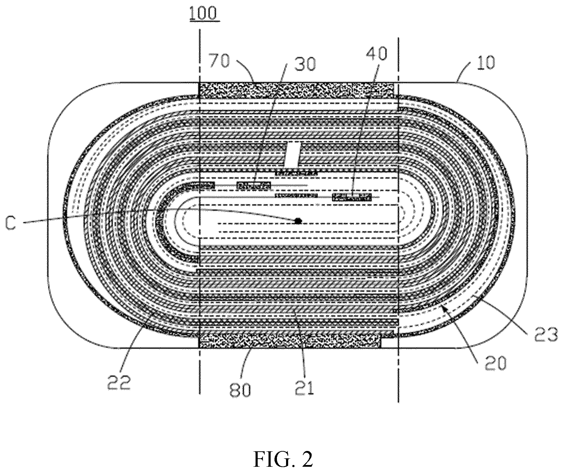

Referring to FIG. 1 and FIG. 2, an embodiment of this application provides an electrochemical device 100, including a housing 10, an electrode assembly 20, and an electrolytic solution (not shown in the drawings). The electrode assembly 20 includes a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, so as to prevent a short circuit of the electrode assembly 20. The electrode assembly 20 is a wound structure and disposed in the housing 10. To be specific, the first electrode plate 21, the separator 23, and the second electrode plate 22 are sequentially stacked and wound to form the electrode assembly 20.

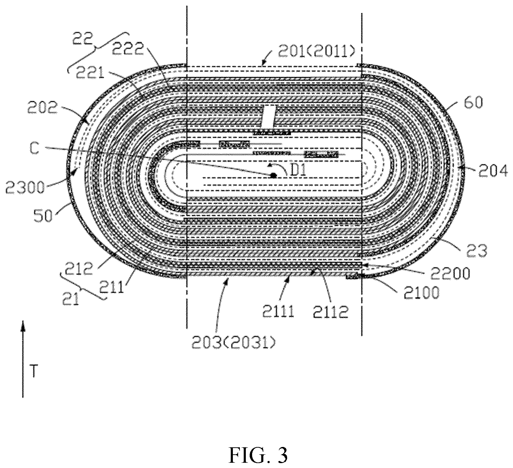

Still referring to FIG. 3, the first electrode plate 21 includes a first current collector 211 and a first active material layer 212 disposed on the first current collector 211. The second electrode plate 22 includes a second current collector 221 and a second active material layer 222 disposed on the second current collector 221. In some embodiments, the first electrode plate 21 is a positive electrode plate, and the second electrode plate 22 is a negative electrode plate. The first current collector 211 may be, but is not limited to, an aluminum foil or a nickel foil. The second current collector 221 may be, but is not limited to, a copper foil or a nickel foil.

In some embodiments, the separator 23 includes a porous substrate. In some embodiments, the separator 23 further includes a coating layer applied onto the porous substrate. The coating layer includes at least one of a binder or inorganic particles.

The porous substrate is a polymer film, a multilayer polymer film, or a nonwoven fabric, which, in each case, is formed by any one of the following polymers or by a composite of two or more of the following polymers: polyethylene, polypropylene, polyethylene terephthalate, polybutylene terephthalate, polyphthalamide, polyester, polyacetal, polyamide, polycarbonate, polyimide, polyether ether ketone, polyaryl ether ketone, polyetherimide, polyamideimide, polybenzimidazole, polyethersulfone, polyphenylene ether, cycloolefin copolymer, polyphenylene sulfide, and polyethylene naphthalene. Such polymers possess high thermal stability, and facilitate surface treatment, thereby making it easy to apply various coating layers. In addition, such polymers are highly flexible and bendable.

The binder includes at least one of the following polymers: a vinylidene fluoride-hexafluoropropylene copolymer, a vinylidene fluoride-trichloroethylene copolymer, a polyacrylate, polyacrylic acid, polyacrylic acid sodium salt, polyacrylonitrile, polyvinylpyrrolidone, polyvinyl acetate, an ethylene-vinyl acetate copolymer, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, an acrylonitrile-styrene-butadiene copolymer, polyvinyl alcohol, polyvinyl ether, polytetrafluoroethylene, polyhexafluoropropylene, a styrene-butadiene copolymer, and polyvinylidene difluoride. Such polymers exert a strong bonding effect to bond inorganic particles together, or bond the separator 23 and the first electrode plate 21 together and bond the separator 23 and the second electrode plate 22 together to form a whole, thereby increasing the hardness of the electrode assembly 20. Alternatively, in other embodiments, the binder may further include other polymers.

The inorganic particles include at least one of the following inorganic particles: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate. Such inorganic particles possess high thermal stability, and can improve the high-temperature resistance performance of the electrochemical device 100.

As shown in FIG. 1 and FIG. 2, the electrochemical device 100 further includes a first tab 30 and a second tab 40. The first tab 30 and the second tab 40 are electrically connected to the first current collector 211 and the second current collector 221, respectively, and protrude from the housing 10 to connect to an external component (not shown in the drawing).

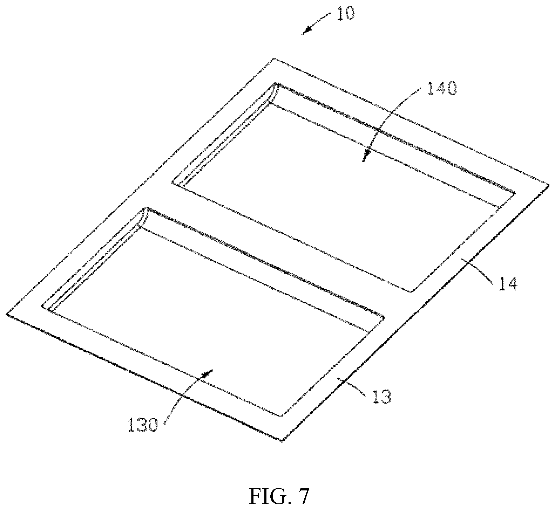

In some embodiments, the housing 10 may be a packaging bag obtained by sealing with a sealing film (such as an aluminum plastic film). In other words, the electrochemical device 100 may be a pouch-type cell. Referring to FIG. 1 and FIG. 7. the housing 10 includes a body portion 11 configured to accommodate the electrode assembly 20, and a sealing flap 12 connected to the body portion 11. The first tab 30 and the second tab 40 protrude from the sealing flap 12. The housing 10 may be formed by heat-sealing the first sealing film 13 and the second sealing film 14. The first sealing film 13 is provided with a first pit 130, and the second sealing film 14 is provided with a second pit 140. In this way, after the first sealing film 13 and the second sealing film 14 are heat-sealed, the first pit 130 fits with the second pit 140 to form an accommodation space for accommodating the electrode assembly 20. Alternatively, the first sealing film 13 may be a flat structure. After the first sealing film 13 and the second sealing film 14 are heat-sealed, the first sealing film 13 closes off the second pit 140 of the second sealing film 14 to form an accommodation space for accommodating the electrode assembly 20. In other embodiments, not limited to a pouch-type cell, the electrochemical device 100 may be a steel- or aluminum-shell cell or the like, without being limited in this application.

As shown in FIG. 3, in the winding direction, the electrode assembly 20 includes a first section 201, a first bend section 202, a second section 203, and a second bend section 204 connected sequentially. In some embodiments, the first section 201 and second section 203 may be flat straight sections parallel to each other. In other embodiments, the first section 201 and the second section 203 may be bent sections, without being limited in this application. In the winding direction, the first section 201 includes a first part 2011, and the second section 203 includes a second part 2031. As shown in FIG. 3, the electrode assembly 20 possesses a winding central axis C perpendicular to the paper surface. The winding direction D1 is a direction of counterclockwise rotation along the winding central axis C shown in FIG. 3. The outermost coil (outermost layer) of the first part 2011 is the separator 23. To be specific, the separator 23 is at least partly exposed at the outer side away from the winding center in the first section 201. In some embodiments, the exposed separator 23 is oriented to the housing. The outermost coil (outermost layer) of the second part 2031 is the first electrode plate 21. To be specific, the first electrode plate 21 is at least partly exposed at the outer side away from the winding center in the second section 203. In some embodiments, the exposed first electrode plate 21 is oriented to the housing. In some embodiments, the outermost coil of the first part 2011 and the outermost coil of the second part 2031 are bonded to and fixed to the housing 10.

As shown in FIG. 3, in some embodiments, the outermost coil of the first section 201 is the separator 23. In this case, the first part 2011 is the entire first section 201. Understandably, in the wound structure, the rolled outermost coil (outermost layer) of the first section 201 is the separator 23. The outermost coil of the second section 203 is the first electrode plate 21. In this case, the second part 2031 is the entire second section 203. Understandably, in the wound structure, the rolled outermost coil (outermost layer) of the second section 203 is the first electrode plate 21.

In some embodiments, the outermost coil of first electrode plate 21 in the second part 2031 is a single-side-coated region. For example, the outermost coil of first electrode plate 21 in the second part 2031 is a positive single-side-coated region. Specifically, the outermost coil of first current collector 211 in the second part 2031 includes a first surface 2111 and a second surface 2112 opposite to the first surface 2111. The first surface 2111 is not coated with a first active material layer 212. The second surface 2112 is coated with the first active material layer 212. The outer surface of the outermost coil of the second part 2031 is the first surface 2111. In other embodiments, the polarities of the first electrode plate 21 and the second electrode plate 22 are interchanged. In this case, the outermost coil of first electrode plate 21 in the second part 2031 may be a negative single-side-coated region.

If the electrode assembly uses the first current collector (such as an aluminum foil) as an ending section, the first current collector can increase the hardness of the electrode assembly to protect the electrode assembly. Moreover, in order to reduce the relative movement of the electrode assembly in the housing, the aluminum foil ending section needs to be bonded to the inner surface of the housing through an adhesive layer, so as to implement relative fixing between the electrode assembly and the housing. When the electrochemical device is mounted inside an electronic device, another adhesive layer is usually required to bond a side of the housing to the inner side of the electronic device, where the side corresponds to the aluminum foil ending section. In this case, when the electronic device is mechanically abused (for example, dropped, colliding, or vibrating), the adhesive layer between the electronic device and the housing will pull the housing to generate a stress. The stress is transmitted to the ending part of the aluminum foil to tear the aluminum foil ending section. In addition, when drifting in the housing, the electrode assembly also pulls the aluminum foil ending section, thereby also tearing the aluminum foil ending section. The torn aluminum foil is prone to pierce the separator and cause a short circuit. On the other hand, after the aluminum foil is torn, the electrode assembly drifts in the housing more violently, and exerts an impact force on the housing. Especially, when the electrochemical device is a pouch-type cell, the electrode assembly is more prone to burst the sealing flap of the housing open and lead to hazards such as electrolyte leakage, short circuits, and fire. This leads to failure of the electrochemical device, and impairs safety of the electrochemical device in use.

In this application, the separator 23 is prolonged and the separator 23 is used as an ending. The outermost coil of the first part 2011 is the separator 23, and the separator 23 is relatively coarse, thereby increasing the friction between the electrode assembly 20 and the housing 10. In addition, the separator 23 can form a protection layer to avoid short circuit hazards caused by wear and tear of the electrode plate inside this part of separator 23 and effectively increase the capability of the electrode assembly 20 in resisting mechanical shocks. Moreover, the outermost coil of the second part 2031 is the first electrode plate 21, and the hardness of the electrode plate is usually high, thereby increasing the hardness of the electrode assembly 20, increasing the capability of the electrode assembly 20 in resisting mechanical shocks, and improving safety.

In some embodiments, in the winding direction, the end part 2300 of the separator 23 is located in the first bend section 202. That is, the separator 23 is not disposed on the outermost coil of the second section 203. The electrochemical device 100 further includes a first bonding piece 50. The first bonding piece 50 is bonded to an outer surface of the first bend section 202 and the end part 2300 of the separator 23. In other words, the first bonding piece 50 serves as ending adhesive to fix the end part 2300 of the separator 23. The end part 2300 of the separator 23 is located in the first bend section 202. Therefore, the first bonding piece 50 is bonded to the outer surface of the first bend section 202, so that the first bonding piece 50 exerts little impact on the thickness of the electrode assembly 20, and avoids increase of the thickness of the electrode assembly 20 caused by the first bonding piece 50 bonded to the first section 201 or the second section 203. As shown in FIG. 3, the thickness of the electrode assembly 20 is a dimension in a direction from the first section 201 to the second section 203. The first bonding piece 50 may be single-sided tape, double-sided tape, or hot-melt adhesive.

In other embodiments, when the end part 2300 of the separator 23 is close to or located at a junction between the first bend section 202 and the second section 203, in order to effectively fix the end part 2300 of the separator 23, the first bonding piece 50 may be prolonged to be bonded to the outer surface of the second section 203. When the end part 2300 of the separator 23 is close to or located at a junction between the first bend section 202 and the first section 201, in order to effectively fix the end part 2300 of the separator 23, the first bonding piece 50 may be prolonged to be bonded to the outer surface of the first section 201.

As shown in FIG. 3, in some embodiments, in the winding direction, the end part 2100 of the first electrode plate 21 is located in the second section 203. The end part 2100 of the first electrode plate 21 may be close to or located at the junction between the second section 203 and the second bend section 204, thereby improving the flatness of the electrode assembly 20 and increasing the energy density of the electrochemical device 100. The electrochemical device 100 further includes a second bonding piece 60. The second bonding piece 60 is bonded to an outer surface of the second bend section 204 and the end part 2100 of the first electrode plate 21. In other words, the second bonding piece 60 serves as ending adhesive to fix the end part 2100 of the first electrode plate 21. The second bonding piece 60 may be single-sided tape, double-sided tape, or hot-melt adhesive.

In order to effectively fix the end part 2100 of the first electrode plate 21, the second bonding piece 60 may be prolonged to be bonded to the outer surface of the first section 201.

As shown in FIG. 3, further, the end part 2200 of the second electrode plate 22 may be located in the second section 203 instead. To be specific, along the winding direction, the separator 23 exceeds the end part 2100 of the first electrode plate 21 and the end part 2200 of the second electrode plate 22, and is further disposed in the second bend section 204, the first section 201, and the first bend section 202. Understandably, when the first electrode plate 21 is a positive electrode plate and the second electrode plate 22 is a negative electrode plate, in order to reduce the hazards of lithium plating, the end part 2200 of the second electrode plate 22 exceeds the end part 2100 of the first electrode plate 21 along the winding direction.

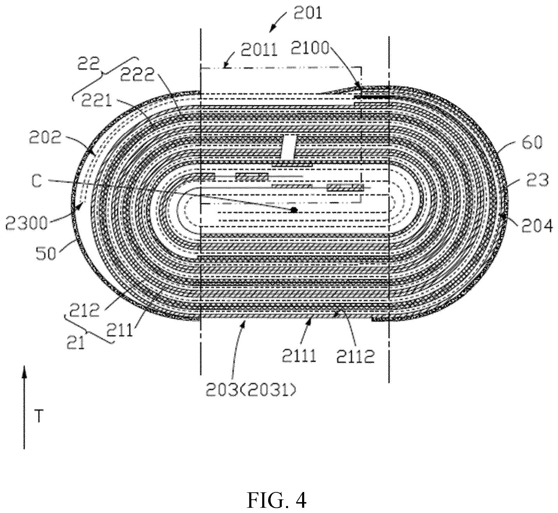

As shown in FIG. 4, in other embodiments, the end part 2100 of the first electrode plate 21 may be further extended and located in the first section 201. Moreover, in the winding direction, the end part 2100 of the first electrode plate 21 does not exceed the end part 2300 of the separator 23. In this case, the outermost coil of the first part 2011 is the separator 23, and an outermost coil of a region other than the first part 2011 of the first section 201 is the first electrode plate 21.

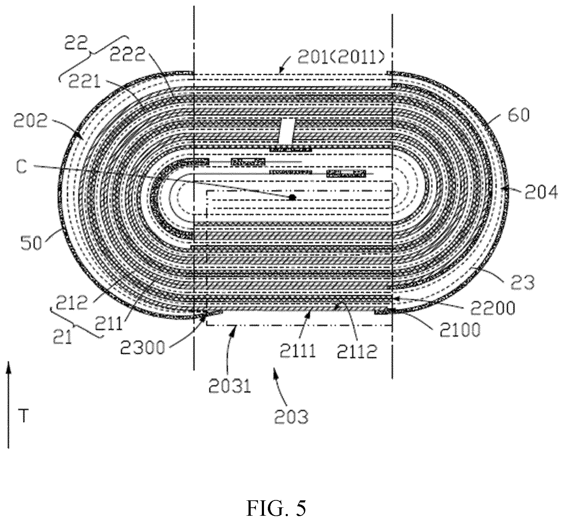

As shown in FIG. 5, in still other embodiments, the end part 2300 of the separator 23 may be further extended and located in the second section 203. Moreover, in the winding direction, the end part 2300 of the separator 23 does not exceed the end part 2100 of the first electrode plate 21. In this case, the outermost coil of the second part 2031 is the first electrode plate 21, and an outermost coil of a region other than the second part 2031 of the second section 203 is the separator 23.

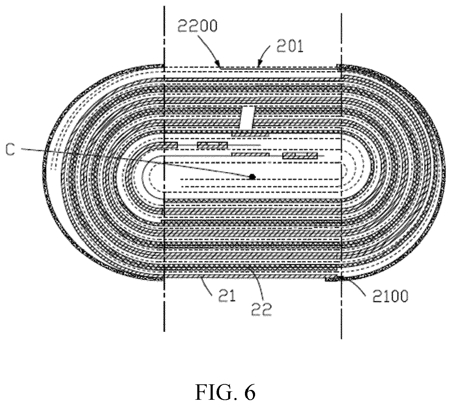

As shown in FIG. 6, in yet other embodiments, when the end part 2100 of the first electrode plate 21 is located in the second section 203, the end part 2200 of the second electrode plate 22 may also exceed the end part 2100 of the first electrode plate 21 and be located in the first section 201.

As shown in FIG. 3, in some embodiments, in the thickness direction of the electrode assembly 20, a projection of the first tab 30 does not overlap with a projection of the first bonding piece 50 and a projection of the second bonding piece 60. Similarly, a projection of the second tab 40 does not overlap with the projection of the first bonding piece 50 and the projection of the second bonding piece 60. To be specific, the projection of the first tab 30 does not overlap the projection of the first bonding piece 50 or the projection of the second bonding piece 60, and the projection of the second tab 40 does not overlap the projection of the first bonding piece 50 or the projection of the second bonding piece 60. In some cases, each tab is connected to the surface of the current collector by welding. Protection adhesive needs to be applied to a weld between the tab and the current collector, so as to prevent a short circuit caused by welding burrs or bending of the tab. This leads to a relatively large thickness of the electrode assembly 20 at the first tab 30 and the second tab 40. The projections of the tabs are set to avoid overlapping the projections of the first bonding piece 50 and the second bonding piece 60, thereby avoiding further increase of the thickness of the electrode assembly 20 at the first tab 30 and the second tab 40. As shown in FIG. 3, the first tab 30 and the second tab 40 may be connected to an initial coil of the first electrode plate 21 and an initial coil of the second electrode plate 22 respectively. However, understandably, the positions of the first tab 30 and the second tab 40 may vary, without being limited in this application.

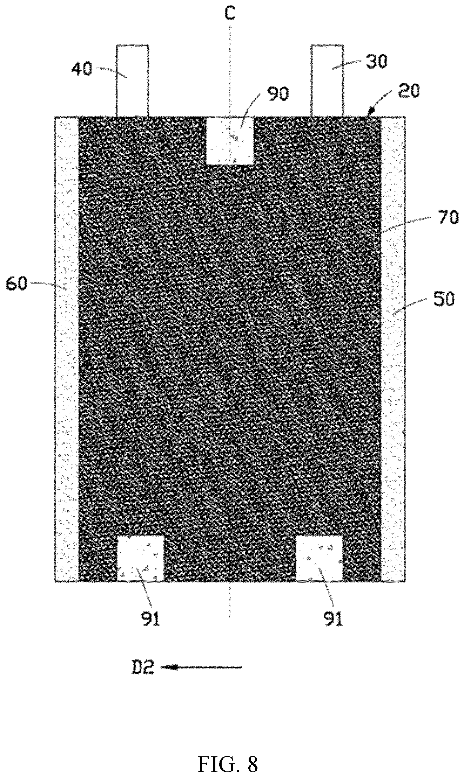

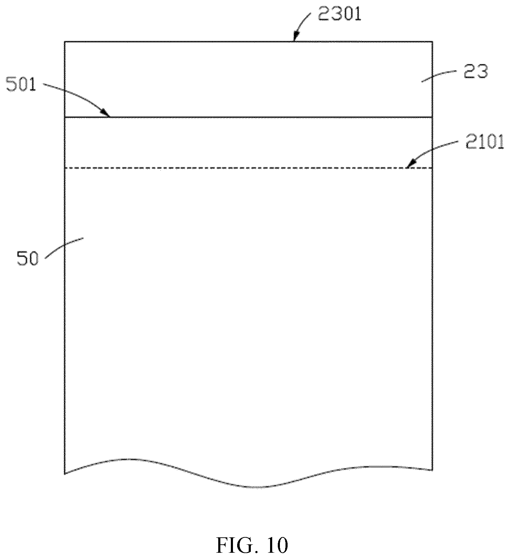

In some embodiments, referring to FIG. 8, FIG. 9, and FIG. 10, in a direction D2 perpendicular to the winding central axis C of the electrode assembly 20, in order to sufficiently avoid direct contact between the first electrode plate 21 and the second electrode plate 22, the projections of the edges of the first electrode plate 21 and the second electrode plate 22 are usually located within the projection of the edge of the separator 23. Further, referring to FIG. 10, the projection of the edge 501 of the first bonding piece 50 is located between the projection of the edge 2101 of the first electrode plate 21 and the projection of the edge 2301 of the separator 23. In other words, the edge 501 of the first bonding piece 50 does not exceed the edge 2301 of the separator 23. Therefore, on the one hand, this can fix the separator 23 and reduce the short-circuit hazards caused by contact between the first electrode plate 21 and the second electrode plate 22 when the separator 23 shrinks during mechanical abuse. On the other hand, this can reduce the hazards of a sealing strength decrease or electrolyte leakage at a sealing flap 12 of the housing 10, where the hazards occur for a reason that an excess part of the first bonding piece 50 exceeding the separator 23 enters the sealing flap 12 of the housing 10.

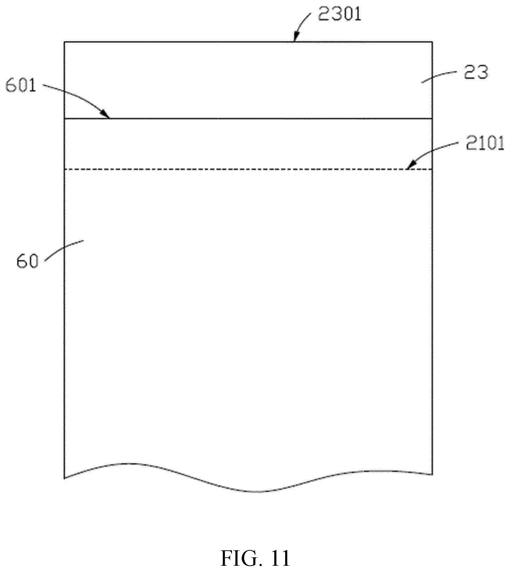

Similarly, referring to FIG. 8, FIG. 9, and FIG. 11, in a direction D2 perpendicular to the winding central axis C of the electrode assembly 20, a projection of an edge 601 of the second bonding piece 60 is located between the projection of the edge 2101 of the first electrode plate 21 and the projection of the edge 2301 of the separator 23. In other words, the edge 601 of the second bonding piece 60 does not exceed the edge 2301 of the separator 23. Therefore, on the one hand, this can fix the separator 23 and reduce the short-circuit hazards caused by contact between the first electrode plate 21 and the second electrode plate 22 when the separator 23 shrinks during mechanical abuse. On the other hand, this can reduce the hazards of a sealing strength decrease or electrolyte leakage at the sealing flap 12 of the housing 10, where the hazards occur for a reason that an excess part of the second bonding piece 60 exceeding the separator 23 enters the sealing flap 12 of the housing 10.

As shown in FIG. 2, in some embodiments, the electrochemical device 100 further includes a third bonding piece 70. The third bonding piece 70 is bonded to an outermost coil of separator 23 in the first part 2011 and the housing 10. Further, the electrochemical device 100 further includes a fourth bonding piece 80. The fourth bonding piece 80 is bonded to a first surface 2111 of the outermost coil in the second part 2031 and the housing 10. In other words, the third bonding piece 70 and the fourth bonding piece 80 are disposed on two opposite outer surfaces of the electrode assembly 20 respectively. The disposed third bonding piece 70 and fourth bonding piece 80 can implement fixing between the electrode assembly 20 and the housing 10, thereby alleviating the drift of the electrode assembly 20 in the housing 10 when the electrochemical device 100 is mechanically abused. Moreover, when the electronic device is mechanically abused, the electrode assembly 20 drifts in the housing 10 and pulls the separator 23. The separator 23 is made of a material that is more flexible than the first current collector 211, and therefore, is not prone to be torn under stress, thereby alleviating the safety problems caused by probable tearing at the end part of the first current collector 211. The third bonding piece 70 and the fourth bonding piece 80 may be double-sided tape or hot-melt adhesive.

Referring to FIG. 7, the third bonding piece 70 may face the bottom of a first pit 130 of a first sealing film 13, and the fourth bonding piece 40 may face the bottom of a second pit 140 of a second sealing film 14.

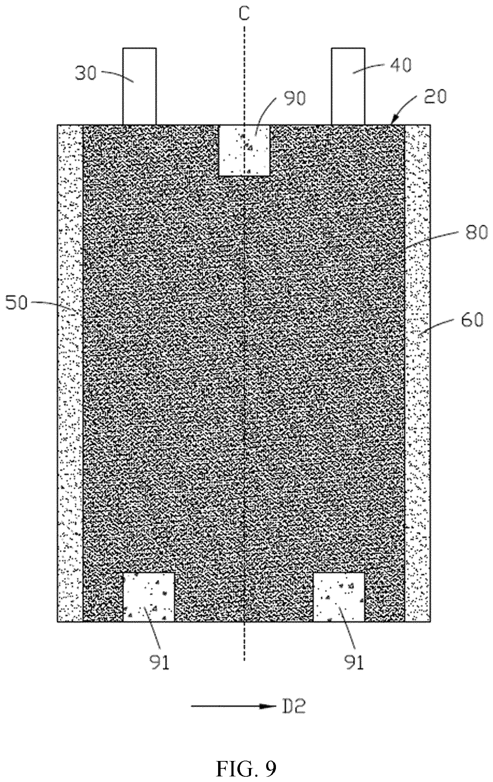

Referring to FIG. 8 and FIG. 9, in some embodiments, the electrochemical device 100 further includes head adhesive tape 90 and end adhesive tape 91. The head adhesive tape 90 is disposed at the head of the electrode assembly 20, where the first tab 30 and the second tab 40 are located, and is bonded to the edge of the separator 23 to the outermost coil of the second section 203. The end adhesive tape 91 is disposed at the end part of the electrode assembly 20, and is bonded to the edge of the separator 23 to the outermost coil of the second section 203. In this way, the head adhesive tape 90 and the end adhesive tape 91 can prevent the separator 23 from pleating or shrinking, where the pleats and shrinkage may lead to direct contact between the first electrode plate 21 and the second electrode plate 22 to result in short circuits.

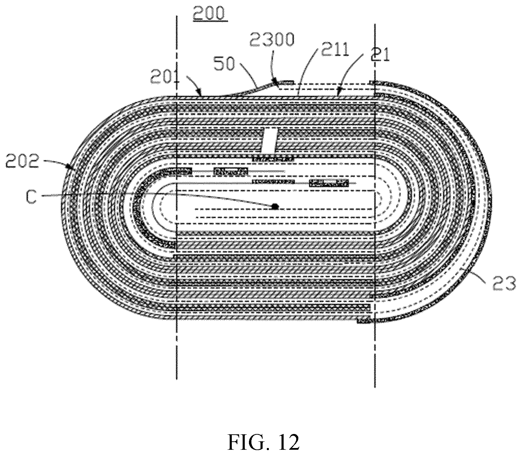

Referring to FIG. 12, another embodiment of this application further provides an electrochemical device 200. Different from the electrochemical device 100, the end part 2300 of the separator 23 in this electrochemical device may also be located in the first section 201 without considering the impact caused by the first bonding piece 50 to the thickness of the electrode assembly 20. In this case, the first bonding piece 50 is bonded to the outer surface of the first section 201 and the end part 2300 of the separator 23. Specifically, as shown in FIG. 12, the first bonding piece 50 is bonded to the first current collector 211 of the first electrode plate 21 and the end part 2300 of the separator 23.

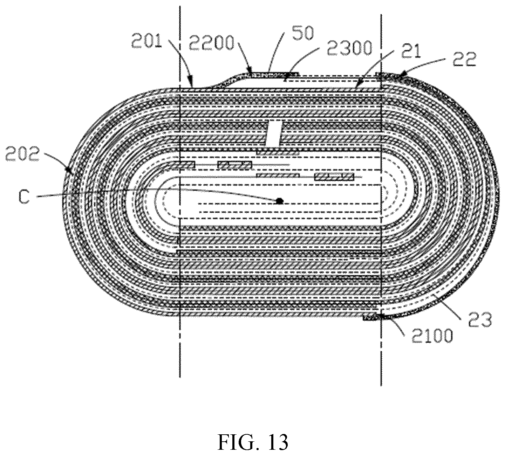

Referring to FIG. 13, in other embodiments, the end part 2200 of the second electrode plate 22 may also exceed the end part 2100 of the first electrode plate 21 and be located in the first section 201. In this case, the first bonding piece 50 may further be bonded to the end part 2200 of the second electrode plate 22 and the end part 2300 of the separator 23.

When the end part 2300 of the separator 23 is close to or located at a junction between the first section 201 and the first bend section 202, in order to effectively fix the end part 2300 of the separator 23, the first bonding piece 50 may further be bonded to the outer surface of the first bend section 202.

The electrochemical devices 100 and 200 according to this application include all devices capable of electrochemical reactions. Specifically, the electrochemical devices 100 and 200 include all types of primary batteries, secondary batteries, fuel cells, solar cells, and capacitors (such as supercapacitors). Optionally, the electrochemical devices 100 and 200 may be a lithium secondary battery, including a lithium metal secondary battery, a lithium-ion secondary battery, a lithium polymer secondary battery, and a lithium-ion polymer secondary battery.

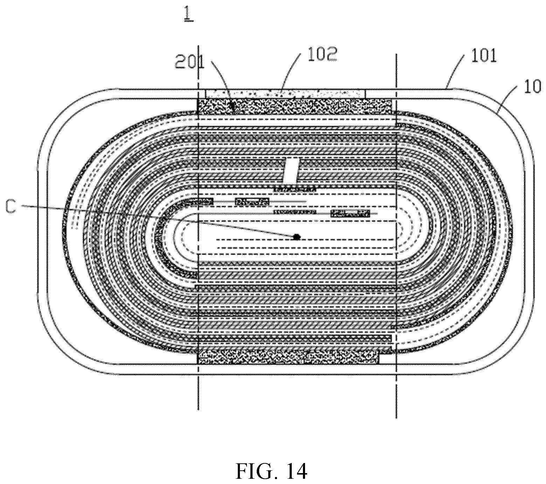

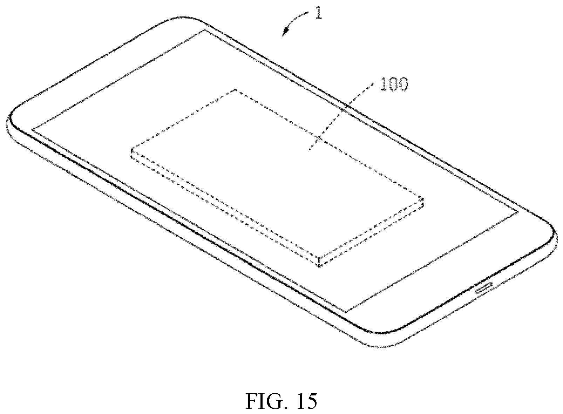

Referring to FIG. 14 and FIG. 15, an embodiment of this application further provides an electronic device 1. The electronic device 1 includes an electrochemical device 100 (or electrochemical device 200), an accommodation chamber 101 and a fifth bonding piece 102. The electrochemical device 100 is disposed in the accommodation chamber 101, and the fifth bonding piece 102 is bonded to the housing 10 oriented to the first section 201 and the accommodation chamber 101. In other words, the fifth bonding piece 102 is bonded to and fix the housing 10 to the accommodation chamber 101. The fifth bonding piece 102 may be double-sided tape or hot-melt adhesive.

In this application, when the electronic device 1 is mechanically abused, the stress generated by the electronic device 1 pulling the housing 10 is transmitted through the fifth bonding piece 101, the housing 10, and the first bonding piece 30 sequentially to the outermost coil of separator 203 in the first section 201. The separator 23 is made of a material that is highly flexible, and therefore, is not prone to be torn under stress, thereby alleviating the safety problems caused by probable tearing at the end part of the first current collector 211.

The electrochemical devices 100 and 200 according to this application are applicable to electronic devices 1 for use in various fields. In an embodiment, the electronic device 1 according to this application may be, but is not limited to: a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

Finally, it needs to be noted that the foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the scope of the technical solutions of this application.

## Claims

1. An electrochemical device, **characterized in that**, the electrochemical device comprises:
a housing; and
an electrode assembly comprising a first electrode plate, a second electrode plate, and a separator disposed between the first electrode plate and the second electrode plate, wherein the electrode assembly is a wound structure and disposed in the housing; and in a winding direction, the electrode assembly comprises a first section, a first bend section, a second section, and a second bend section connected sequentially;
in the winding direction, the first section comprises a first part, the second section comprises a second part, an outermost coil of the first part is the separator, and an outermost coil of the second part is the first electrode plate.

2. The electrochemical device according to claim 1, wherein an outermost coil of the first section is the separator, and an outermost coil of the second section is the first electrode plate.

3. The electrochemical device according to claim 1, wherein in the winding direction, an end part of the separator is located at the first bend section, and the electrochemical device further comprises a first bonding piece, and the first bonding piece is bonded to an outer surface of the first bend section and the end part of the separator.

4. The electrochemical device according to claim 3, wherein the first bonding piece is further bonded to an outer surface of at least one of the first section or the second section.

5. The electrochemical device according to claim 3, wherein in the winding direction, an end part of the first electrode plate is located at the second section, and the electrochemical device further comprises a second bonding piece, and the second bonding piece is bonded to an outer surface of the second bend section and the end part of the first electrode plate.

6. The electrochemical device according to claim 5, wherein the second bonding piece is further bonded to an outer surface of the first section.

7. The electrochemical device according to claim 5, wherein at least one of the first bonding piece or the second bonding piece is double-sided tape or hot-melt adhesive.

8. The electrochemical device according to claim 1, further comprising a third bonding piece, and the third bonding piece is bonded to an outermost coil of the separator in the first part and the housing.

9. The electrochemical device according to claim 1, wherein the first electrode plate comprises a first current collector and a first active material layer disposed on the first current collector, the first current collector comprises a first surface, an outer surface of an outermost coil in the second part is the first surface, the electrochemical device further comprises a fourth bonding piece, and the fourth bonding piece is bonded to the first surface and the housing together.

10. The electrochemical device according to claim 5, further comprising a first tab, the first tab is connected to the first electrode plate or the second electrode plate; and in a thickness direction of the electrode assembly, a projection of the first tab does not overlap with a projection of the first bonding piece and a projection of the second bonding piece.

11. The electrochemical device according to claim 5, wherein
in a direction perpendicular to a winding central axis of the electrode assembly, a projection of an edge of the first bonding piece is located between a projection of an edge of the first electrode plate and a projection of an edge of the separator; and/or
in a direction perpendicular to a winding central axis of the electrode assembly, a projection of an edge of the second bonding piece is located between a projection of an edge of the first electrode plate and a projection of an edge of the separator.

12. An electronic device, comprising the electrochemical device according to any one of claims 1 to 11, wherein the electronic device further comprises an accommodation chamber and a fifth bonding piece, the electrochemical device is disposed in the accommodation chamber, and the fifth bonding piece is bonded to the housing oriented to the first section together with the accommodation chamber.
